Europäisches Patentamt

European Patent Office

Office européen des brevets

(19)

(11) Numéro de publication : **0 352 151 B1**

(12) **FASCICULE DE BREVET EUROPEEN**

(45) Date de publication du fascicule du brevet :
04.12.91 Bulletin 91/49

(51) Int. Cl.⁵ : **B60J 5/10**

(21) Numéro de dépôt : **89401774.8**

(22) Date de dépôt : **22.06.89**

(54) **Panneau mobile transparent et notamment panneau transparent d'un hayon de véhicle automobile.**

(30) Priorité : 21.07.88 FR 8809890

(43) Date de publication de la demande :
24.01.90 Bulletin 90/04

(45) Mention de la délivrance du brevet :
04.12.91 Bulletin 91/49

(84) Etats contractants désignés :
DE ES GB IT

(56) Documents cités :
GB-A- 2 003 213
PATENT ABSTRACTS OF JAPAN, vol. 10, no.
77 (M-464)[2134], 26 mars 1986; & JP-A-60 219
120 (KINUGAWA GOMU KOGYO K.K.) 01-
11-1985

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **De Bortoli, Lucio**
**13, rue des Côtes Reverses**
**F-78700 Conflans St. Honorine (FR)**
Inventeur : **Noyrez, Eric**
**40, rue Salvatore Allende**
**F-92000 Nanterre (FR)**
Inventeur : **Nou, Guy**
**47, rue Gustave Courbet**
**F-25200 Montbeliard (FR)**

(74) Mandataire : **Bouget, Lucien et al**
**Cabinet Lavoix 2, Place d'Estienne d'Orves**
**F-75441 Paris Cédex 09 (FR)**

## Description

L'invention concerne un vitrage et notamment un vitrage d'un hayon d'un véhicule automobile comportant un panneau transparent monté pivotant sur un support, autour d'un axe défini par au moins deux charnières.

Les hayons de véhicules automobiles situés à l'arrière du véhicule sont montés pivotants sur la carrosserie par leur partie supérieure et comportent une partie inférieure assurant la fermeture du hayon et une continuité de ligne avec la caisse du véhicule.

Une partie du hayon est constituée par un panneau transparent en verre ou en matière plastique constituant la vitre arrière du véhicule.

Sur certains types de véhicules, les charnières sont fixées directement sur le bord supérieur du panneau transparent. Chacune des charnières est articulée sur une partie fixe solidaire de la carrosserie.

On connaît en particulier des charnières ayant la forme d'étriers engagées sur le bord du panneau.

Pour réaliser la fixation des charnières sur le bord du panneau transparent, il est nécessaire d'effectuer des perçages de ce panneau, ce qui est une opération difficile, particulièrement dans le cas ou le panneau est en verre.

Le perçage du panneau transparent et la fixation des charnières sur la chaîne de fabrication sont des opérations coûteuses et qui nécessitent un personnel bien entraîné.

De plus, la fixation des charnières est rendue plus complexe par le fait que les panneaux transparents, en particulier lorsqu'ils sont constitués par une plaque de verre, présentant une épaisseur qui est susceptible de varier entre certaines limites correspondant aux tolérances de fabrication.

Le but de l'invention est donc de proposer un vitrage et notamment un vitrage d'un hayon de véhicule automobile, comportant un panneau mobile transparent et au moins deux charnières constituées sous la forme d'étriers ayant deux branches sensiblement parallèles dont l'écartement est supérieur à l'épaisseur du panneau transparent engagées sur le bord du panneau, de manière que la face intérieure de chacune des branches de l'étrier soit en vis-à-vis d'une face du panneau et reliées de manière articulée à une pièce fixe solidaire d'un support, autour d'un axe de pivotement, ce vitrage étant d'une réalisation simple en ce qui concerne la fixation des charnières sur son bord articulé.

Dans ce but, une cale d'épaisseur en forme de coin est engagée parallèlement à l'axe de pivotement entre la surface intérieure d'une des branches de l'étrier et la face correspondante du panneau transparent pour fixer le bord du panneau dans l'étrier et chacune des branches de l'étrier est fixée sur la face correspondante du panneau par collage.

Des modes particuliers de réalisation de l'invention sont indiqués dans les revendications dépendantes 2 à 7.

Afin de bien faire comprendre l'invention, on va maintenant décrire, à titre d'exemple non limitatif, en se référant aux figures jointes en annexe, un mode de réalisation d'un panneau transparent pour hayon de véhicule automobile, suivant l'invention.

La figure 1 est une vue en perspective de l'ensemble d'un hayon de véhicule automobile comportant un panneau transparent articulé.

La figure 2 est une vue en coupe suivant 2-2 de la figure 1.

La figure 3 est une vue aggrandie du détail 3 de la figure 2 montrant une charnière d'articulation montée sur un panneau d'épaisseur minimale.

La figure 3A est une vue en coupe suivant A de la figure 3.

La figure 4 est une vue analogue à la vue de la figure 3, d'une partie mobile d'une charnière montée sur un panneau d'épaisseur maximale.

La figure 4A est une vue en coupe suivant A de la figure 4.

La figure 5 est une vue en coupe d'une charnière telle que représentée sur les figures 3A et 4A, montrant les couches de liaison par collage de la charnière et du panneau transparent.

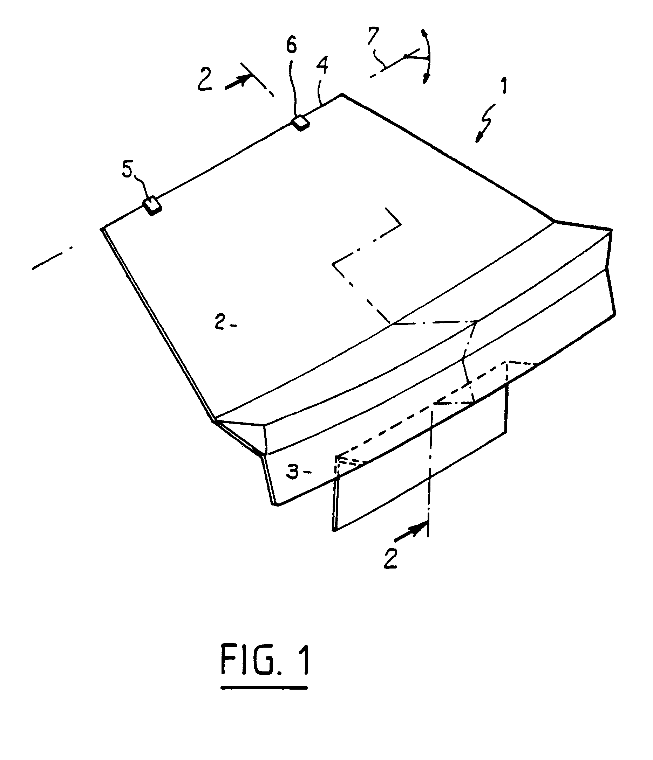

Sur la figure 1, on voit un hayon ou volet arrière de véhicule automobile désigné de manière générale par le repère 1. Le hayon comporte un panneau transparent 2 en verre pratiquement plan et une partie inférieure 3 de raccordement à la caisse du véhicule.

Le bord supérieur 4 du panneau 2 est articulé par l'intermédiaire de charnières 5 et 6 sur la carrosserie du véhicule, de manière que le hayon soit monté pivotant autour d'un axe 7 horizontal sur le véhicule.

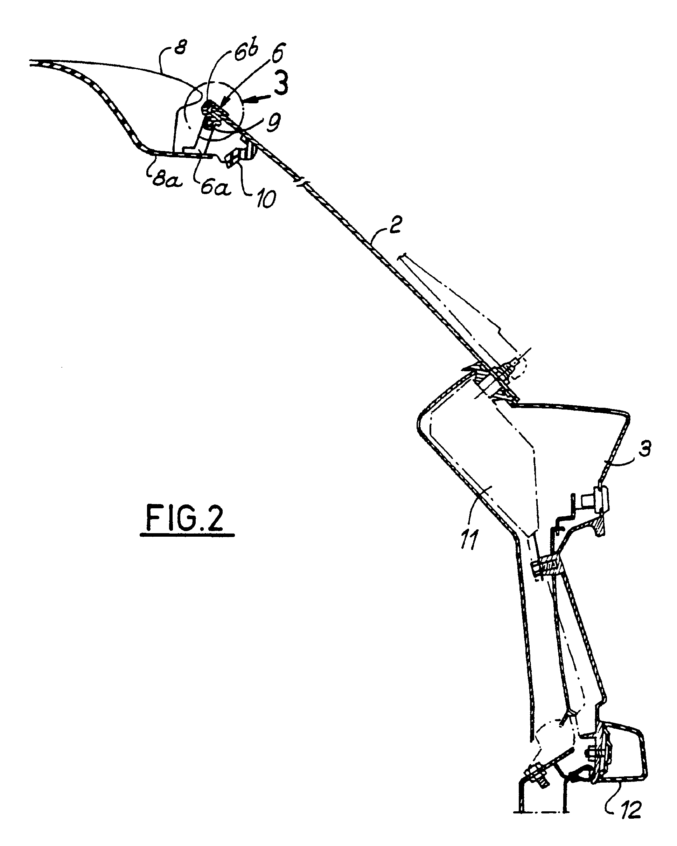

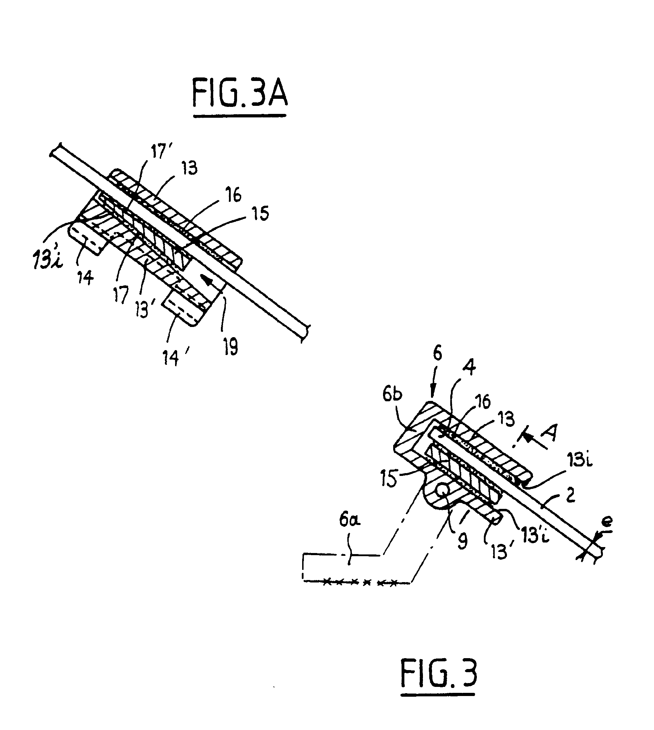

Sur les figures 2 et 3, on voit que la charnière 6 est réalisée sous la forme d'un étrier 6b articulé sur une partie fixe 6a reliée rigidement au pavillon 8 du véhicule. L'axe d'articulation 9 de l'étrier 6b est dirigé suivant la direction de l'axe de pivotement 7.

Un joint d'étanchéité 10 est fixé suivant le bord de la garniture de pavillon 8a et vient en appui contre la surface intérieure du panneau 2, lorsque celui-ci est en position de fermeture comme représenté sur la figure 2.

La partie inférieure 3 du hayon fixée le long du bord inférieur du panneau 2 comporte les éléments de fermeture du hayon, un dispositif essuie-glace arrière 11 et des éléments profilés assurant une continuité de lignes avec la partie inférieure de la caisse du véhicule comportant le pare-chocs 12.

Sur les figures 3 et 3a, on voit la charnière 6 constituée sous la forme d'un étrier 6b fixé le long du bord 4 du panneau transparent 2 et articulé sur la partie fixe 6a ou charnon soudée sur le pavillon du véhicule.

La charnière constituée sous la forme d'un étrier 6b ayant une section transversale en U comporte deux branches sensiblement parallèles 13 et 13'. La branche inférieure 13' de l'étrier comporte deux paliers 14 et 14', destinés à recevoir l'axe de rotation 9 de la charnière qui est fixé sur le charnon 6a lui-même solidaire de la carrosserie du véhicule.

On voit sur les figures 3 et 3A que l'écartement des branches 13 et 13' de l'étrier est sensiblement supérieur à l'épaisseur e du panneau transparent 2 constitué par une plaque de verre.

Lorsque l'étrier 6b de la charnière 6 est engagé sur le bord 4 du panneau 2, comme représenté sur la figure 3, il subsiste des jeux importants entre les faces internes 13i et 13'i des branches de l'étrier et les faces correspondantes situées en vis-à-vis du panneau 2, c'est-à-dire respectivement la face supérieure et la face inférieure de ce panneau.

La liaison entre la branche supérieure 13 de l'étrier et la face supérieure du panneau est assurée par une couche de colle 16.

Une cale 15 dont les faces sont inclinées l'une par rapport à l'autre pour constituer un dièdre dans la direction axiale, comme visible sur la figure 3A, est intercalée entre la face inférieure du panneau 2 et la face intérieure 13'i de la branche inférieure 13' de l'étrier. La surface intérieure 13'i de cette branche 13' est inclinée dans le sens axial suivant un angle correspondant sensiblement à l'angle du dièdre de la cale 15. Des couches de colle 17 et 17' sont intercalées entre la branche 13' et la cale 15 et entre la cale 15 et la face inférieure du panneau 2 respectivement. Les couches de colle 16, 17 et 17' assurent la fixation de l'étrier sur le bord du panneau 2.

Pour réaliser le montage de la charnière sur le panneau, les surfaces intérieures 13i et 13'i des branches de l'étrier sont revêtues de colle ainsi que les deux faces du panneau 2, en regard de ces faces.

L'étrier 6b est engagé sur le bord du panneau puis la cale 15 est engagée dans l'espace subsistant entre la face inférieure du panneau 2 et la surface interne 13'i de la branche 13' de l'étrier, suivant le sens de la flèche 19 (figure 3A).

La cale 15 est poussée dans le sens de la flèche 19 pour réaliser le serrage et le collage du panneau 2 à l'intérieur de l'étrier.

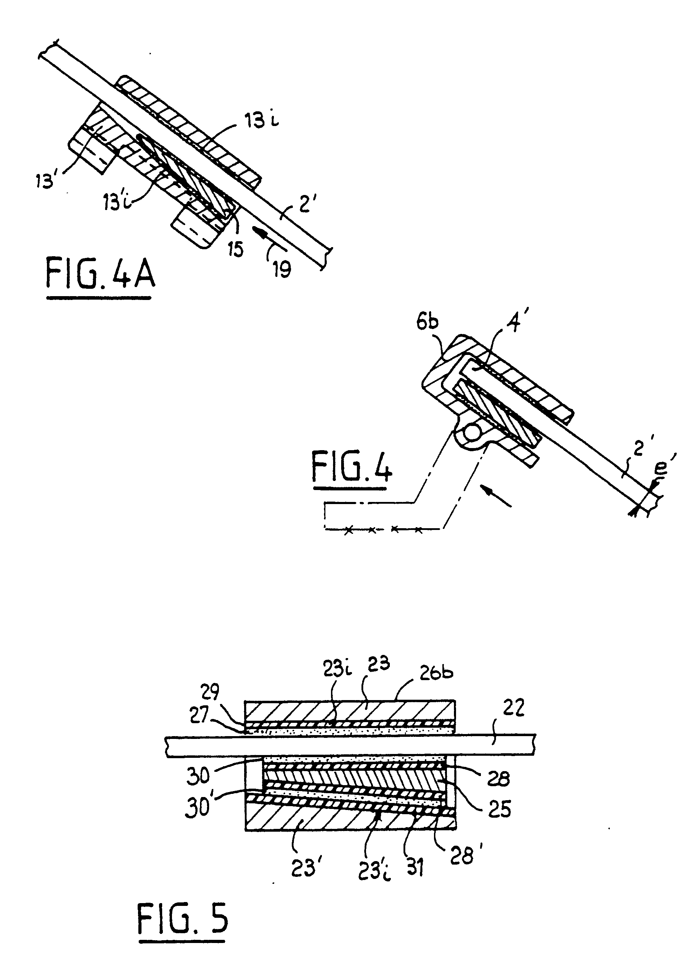

Sur les figures 4 et 4a, on a représenté une charnière identique à la charnière représentée sur les figures 3 et 3A (les éléments correspondants portant les mêmes repères sur ces figures) ; l'étrier 6b de la charnière 6 représentée sur les figures 4 et 4A est fixé sur le bord 4' d'un panneau 2' dont l'épaisseur e' est sensiblement supérieure à l'épaisseur e du panneau 2 représenté sur les figures 3 et 3A.

En effet, dans le cas de panneaux transparents pour hayon de véhicule constitués par des plaques de verre, il n'est pas possible de garantir l'obtention d'une épaisseur parfaitement constante des plaques de verre constituant les panneaux.

L'épaisseur des plaques de verre obtenues dans un processus de fabrication particulier varie entre une épaisseur minimale et une épaisseur maximale qui représentent les tolérances de fabrication.

Dans le cas d'une fabrication de plaques dont l'épaisseur minimale est e et l'épaisseur maximale e', on voit sur les figures 3 et 3A et 4 et 4A que les différences d'épaisseur peuvent être facilement rattrapées par le positionnement de la cale 15.

Dans le cas d'un panneau présentant l'épaisseur minimale (figure 3A), la cale 15 est poussée dans le sens de la flèche 19, jusqu'à l'extrémité de la rampe constituée par la surface 13'i pour réaliser le calage.

Au contraire, dans le cas de la plaque d'épaisseur maximale (figure 4A), la cale 15 occupe une position située au début de la rampe de la surface 13'i, lorsque le calage est réalisé.

Il est donc possible d'utiliser des charnières standard en forme d'étrier dont l'écartement des branches est supérieur à l'épaisseur maximale du panneau de verre sur lequel la charnière doit être fixée. Le rattrapage de jeu peut être effectué dans tous les cas, compte tenu de l'épaisseur des couches de colle de liaison, grâce à une cale introduite plus ou moins profondément dans l'étrier, suivant la direction axiale de la charnière.

Dans le cas d'un panneau de verre constituant le vitrage d'un hayon arrière de véhicule automobile articulé sur la carrosserie par son bord supérieur, on utilisera généralement deux charnières 5, 6 fixées sur le bord du panneau dans des positions symétriques, comme représenté sur la figure 1.

Les deux charnières seront de préférence entièrement symétriques l'une de l'autre par rapport au plan médian du panneau c'est-à-dire au plan vertical perpendiculaire au bord supérieur 4 du panneau 2 situé à égale distance des charnières 5 et 6.

Les charnières 5 et 6 entièrement symétriques par rapport au plan médian comportent des parties mobiles en forme d'étrier dont les surfaces internes inférieures 13'i sont inclinées dans des sens différents, les rampes de ces surfaces 13'i s'élevant de l'intérieur vers l'extérieur du panneau. Les cales 15 des charnières 5 et 6 présentent des surfaces inclinées correspondantes et peuvent être introduites dans l'étrier, depuis le bord de la charnière disposé vers l'intérieur du panneau 2.

Sur la figure 5, on a représenté le bord supérieur d'une plaque de verre 22 sur laquelle est fixé une charnière 26b analogue aux charnières représentées sur les figures 3A et 4A et constituée sous la forme d'un étrier comportant deux branches 23, 23', la branche inférieure 23' présentant une surface intérieure inclinée 23'i

La liaison par collage de la surface intérieure 23i et de la surface supérieure de la vitre 22 est améliorée par l'utilisation d'une couche d'activateur 29 déposée sur la surface intérieure 23i de la branche 23. La couche de colle 27 assurant la liaison entre la branche supérieure de la charnière et la surface supérieure de la vitre 22 est intercalée entre la couche d'activateur 29 et la surface supérieure de la vitre.

La liaison par collage entre la surface intérieure 23'i de la branche inférieure 23' de l'étrier et la surface inférieure de la vitre est de même assurée par l'intermédiaire de couches d'activateur et de couches de colle superposées. Une cale en forme de coin 25 dont les faces sont revêtues par des couches 28 et 28' d'activateur est introduite entre la surface inférieure de la vitre 22 et la surface intérieure 23'i de la branche inférieure de l'étrier, avec interposition de couches de colle 30 et 30'. La surface 23'i de la branche inférieure 23' de l'étrier est revêtue par une couche 31 d'activateur.

La liaison par collage est ainsi améliorée, les surfaces des pièces à joindre, à l'exception des surfaces de la plaque de verre 22, étant recouvertes par un produit activateur assurant une liaison de grande résistance avec la couche de colle.

Les charnières constituées par un étrier peuvent être en un matériau métallique tel que l'acier ou un alliage léger. La charnière pourrait être également réalisée en une matière plastique ou une matière composite, suivant les caractéristiques recherchées pour ces pièces.

Dans le cas d'une charnière comportant un étrier et une cale en métal ou en matériau composite, on pourra utiliser une colle à base de silane pour assurer la liaison au verre, un activateur tel que l'activateur commercialisé sous la désignation 312 NF par la Société LOCTITE pour recouvrir les surfaces de l'étrier et de la cale et enfin un adhésif tel que l'adhésif 13144 de la Société LOCTITE, à base acrylique pour assurer la liaison des pièces entre elles.

La fabrication du vitrage suivant l'invention comportant des charnières collées ne nécessite que des opérations simples et facilement automatisables.

Ce procédé de fabrication ne comporte pas d'opération de perçage du panneau transparent, si bien qu'il est possible d'utiliser une plaque de verre pour constituer ce panneau, sans compliquer le procédé de fabrication.

En outre, il est possible d'utiliser des pièces de dimensions standard pour constituer les charnières, quelles que soient les tolérances de fabrication de la plaque de verre pouvant se traduire par une épaisseur variable dans un certain intervalle.

L'invention ne se limite pas au mode de réalisation qui a été décrit.

On peut envisager l'utilisation de charnières d'une forme un peu différente de celle qui a été décrire, toute forme d'étrier ayant des branches dont l'écartement est suffisant pour recevoir le bord du panneau transparent, pouvant être utilisée.

On peut envisager l'utilisation de matériaux différents de ceux qui ont été indiqués pour constituer le panneau transparent, les charnières et les couches de liaison.

On peut envisager l'utilisation de l'invention pour fixer des charnières sur le bord d'un panneau en matière plastique transparente, bien que les panneaux en matière plastique puissent être généralement obtenus avec une très bonne précision dimensionnelle, en ce qui concerne leur épaisseur.

L'invention s'applique non seulement à la fabrication de vitrage pour hayons de véhicules automobiles mais également pour la fabrication de vitrages pour d'autres usages, dans le domaine de l'industrie automobile ou de la construction.

## Revendications

1. Vitrage et notamment un vitrage d'un hayon de véhicule automobile, comportant un panneau mobile transparent (2, 2', 22) et au moins deux charnières (5, 6) constituées sous la forme d'étriers (6b, 26b) ayant deux branches (13, 13') sensiblement parallèles dont l'écartement est supérieur à l'épaisseur du panneau transparent engagées sur le bord du panneau, de manière que la face intérieure de chacune des branches de l'étrier (6b, 26b) soit en vis-à-vis d'une face du panneau (2, 2', 22) et reliées de manière articulée à une pièce fixe (6a) solidaire d'un support (8), autour d'un axe de pivotement (7) caractérisé par le fait qu'une cale d'épaisseur (15, 15', 25) en forme de coin est engagée parallèlement à l'axe de pivotement (7) entre la surface intérieure (13'i) d'une des branches (13') de l'étrier (6b) et la face correspondante du panneau transparent (2, 2', 22) pour fixer le bord du panneau dans l'étrier et en ce que chacune des branches (13, 13') de l'étrier (6b, 26b) est fixée sur la face correspondante du panneau par collage.

2. Vitrage suivant la revendication 1, caractérisé par le fait que la surface interne (13'i) de la branche (13) de l'étrier (6b) et la face correspondante de la cale d'épaisseur (15, 15', 25) sont inclinées dans la direction axiale, par rapport à l'axe de la charnière.

3. Vitrage suivant la revendication 2, constitué par une plaque de verre dont l'épaisseur variable peut être comprise entre une épaisseur minimale ($\underline{e}$) et une épaisseur maximale ($\underline{e'}$), caractérisé par le fait que l'écartement minimal entre les branches (13, 13') de l'étrier (6b) est supérieur à l'épaisseur maximale ($\underline{e'}$) de la plaque de verre, la cale d'épaisseur (15, 15', 25) pouvant être poussée plus ou moins dans la direction axiale, à l'intérieur de l'étrier, suivant l'épaisseur de la plaque de verre.

4. Vitrage suivant l'une quelconque des revendications 1 à 3, caractérisé par le fait que les charnières sont réalisées en un matériau métallique.

5. Vitrage suivant l'une quelconque des revendications 1 à 3, caractérisé par le fait que les charnières sont constituées par un matériau plastique composite.

6. Vitrage suivant l'une quelconque des revendications 4 et 5, caractérisé par le fait que les surfaces internes à joindre des branches (13, 13') des charnières sont recouvertes par une couche de matériau activateur.

7. Vitrage suivant l'une quelconque des revendications 1 à 6, constituant un hayon de véhicule automobile, caractérisé par le fait que la pièce fixe (6a) sur laquelle sont articulées les charnières (6) est fixée sur une partie de la carrosserie du véhicule, telle que le pavillon (8), que les charnières (5, 6) sont fixées sur le bord supérieur (4) du panneau (2) et qu'une partie inférieure (3) du hayon assurant une continuité de lignes avec la carrosserie du véhicule est fixée suivant le bord inférieur du panneau (2).

**Patentansprüche**

1. Verglasung und insbesondere eine Verglasung einer Kraftfahrzeug-Heckklappe, mit einer beweglichen durchsichtigen Platte (2, 2', 22) und wenigstens zwei Scharnieren (5, 6), welche als Bügel (6b, 26b) mit zwei im wesentlichen parallelen Schenkeln (13, 13') ausgebildet sind, deren Entfernung größer ist als die Dicke der durchsichtigen Platte und die an der Kante der Platte angreifen, so daß die Innenfläche jedes der Schenkel der Bügel (6b, 26b) einer Fläche der Platte (2, 2', 22) gegenüberliegt und gelenkig mit einem festen Stück (6a), das einstückig mit einem Träger (8) ausgebildet ist, um eine Schwenkachse (7) verbunden ist, dadurch **gekennzeichnet,** daß eine keilförmige Unterlegplatte (15, 15', 25) parallel zur Schwenkachse (7) zwischen der Innenfläche (13'i) eines der Schenkel (13') des Bügels (6b) und der entsprechenden Fläche der transparenten Platte (2, 2', 22) in Eingriff ist, um die Kante der Platte in dem Bügel zu befestigen, und daß jeder der Schenkel (13, 13') des Bügels (6b, 26b) durch Kleben auf der entsprechenden Fläche der Platte befestigt ist.

2. Verglasung nach Anspruch 1, dadurch gekennzeichnet, daß die Innenfläche (13'i) des Schenkels (13) des Bügels (6b) und die entsprechende Fläche der Unterlegscheibe (15, 15', 25) in axialer Richtung in bezug auf die Achse des Scharniers geneigt sind.

3. Verglasung nach Anspruch 2, gebildet durch eine Glasplatte, deren variable Dicke zwischen einer minimalen Dicke ($\underline{e}$) und einer maximalen Dicke ($\underline{e}'$) liegen kann, dadurch gekennzeichnet, daß der minimale Abstand zwischen den Schenkeln (13, 13') des Bügels (6b) größer als die maximale Dicke ($\underline{e}'$) der Glasplatte ist, wobei die Unterlegscheibe (15, 15', 25) mehr oder weniger in die axiale Richtung ins Innere des Bügels, je nach Dicke der Glasplatte, geschoben werden kann.

4. Verglasung nach einem der Ansprüche 1 bis 3, dadurch gekennzeichnet, daß die Scharniere aus metallischem Material gebildet sind.

5. Verglasung nach einem der Ansprüche 1 bis 3, dadurch gekennzeichnet, daß die Scharniere aus einem Verbund-Kunststoffmaterial gebildet sind.

6. Verglasung nach Anspruch 4 oder 5, dadurch gekennzeichnet, daß die Innenflächen zum Verbinden mit den Bügeln (13, 13') der Scharniere mit einer Schicht aus Aktivatormaterial bedeckt sind.

7. Verglasung nach einem der Ansprüche 1 bis 6, welche eine Kraftfahrzeug-Heckklappe bildet, dadurch gekennzeichnet, daß das feste Stück (6a), auf dem die Scharniere (6) gelenkig angebracht sind, an einem Teil der Kraftfahrzeug-Karosserie befestigt sind, wie dem Dach (8), daß die Scharniere (5, 6) an der Oberkante (4) der Platte (2) befestigt sind und daß ein unterer Teil (3) der Heckklappe, welcher die Kontinuität der Linienführung mit der Karosserie des Fahrzeugs gewährleistet, anschließend an der Unterkante der Platte (2) befestigt ist.

**Claims**

1. A glazing, more particularly a glazing for an automotive vehicle rear gate, comprising a movable transparent panel (2, 2', 22) and at least two hinges (5, 6) taking the form of stirrups (6b, 26b) which have two substantially parallel arms (13, 13') whose distance apart is greater than the thickness of the transparent panel and which so engage with the panel edge that the inner face of each of the arms of the stirrup (6b, 26b) is opposite a face of the panel (2, 2', 22) and which are hinged around a pivoting axis (7) to a fixed member (6a) connected to a support (8), characterized in that a wedge-shaped shim (15, 15', 25) is engaged parallel with the pivoting axis (7) between the inner face (13'i) of one of the arms (13') of the stirrup (6b) and the corresponding face of the transparent panel (2, 2', 22) to fix the panel edge in the stirrup, each of the arms (13, 13') of the stirrup (6b, 26b) being attached to the corresponding panel face by gluing.

2. A glazing according to claim 1, characterized in that the inner face (13'i) of the arm (13) of the stirrup (6b) and the corresponding face of the shim (15, 15', 25) are inclined in the axial direction in relation to the axis of the hinge.

3. A glazing according to claim 2, formed by a glass plate whose variable thickness can be between a minimum thickness ($\underline{e}$) and a maximum thickness ($\underline{e}'$), characterized in that the minimum distance between the arms (13, 13') of the stirrup (6b) is greater than the maximum thickness ($\underline{e}$) of the glass plate, and the shim (15, 15', 25) can be inserted to a varying distance in the axial direction inside the stirrup in dependence on the thickness of the glass plate.

4. A glazing according to any of claims 1 to 3, characterized in that the hinges are made from a metallic material.

5. A glazing according to any of claims 1 to 3, characterized in that the hinges are formed by a composite plastics material.

6. A glazing according to either of claims 4 and 5, characterized in that the inner faces of the hinge arms (13, 13') to be joined are coated with a layer of activating material.

7. A glazing according to any of claims 1 to 6, forming an automotive vehicle rear gate, characterized in that the fixed member (6a) to which the hinges (6) are articulated is attached to a portion of the vehicle bodywork, such as its roof (8), the hinges (5, 6) are attached to the upper edge (4) of the panel (2), and a lower portion (3) of the rear gate ensuring continuity of line with the vehicle bodywork is attached in accordance with the lower edge of the panel (2).

FIG. 1

FIG.2

# FIG.3A

# FIG.3

FIG.4A

FIG.4

FIG.5